# EUROPEAN PATENT SPECIFICATION

(11) **EP 3 312 409 B1**
(45) Date of publication and mention of the grant of the patent: **01.04.2020**
(21) Application number: 17154937.1
(22) Date of filing: 07.02.2017
(51) Int. Cl.: F02N 11/04, F01P 1/06, F01P 5/06, F01P 11/10, H02K 7/00, B60K 6/485, H02K 3/52, H02K 7/14, H02K 7/18, H02K 11/215

(54) **ENGINE**
MOTOR
MOTEUR

(30) Priority: 20.10.2016 JP 2016206126
(43) Date of publication of application: 25.04.2018
(73) Proprietor: Yamaha Hatsudoki Kabushiki Kaisha, Iwata-shi, Shizuoka 438-8501 (JP)
(72) Inventor: NAKAGAWA, Masayuki, Iwata-shi, Shizuoka 438-8501 (JP)
(74) Representative: Grünecker Patent- und Rechtsanwälte PartG mbB

(56) References cited:
- EP-A2- 2 830 199
- WO-A1-2016/103619
- JP-A- 2013 233 030
- JP-A- 2015 100 221
- US-A1- 2003 140 881

## Description

The present invention relates to an engine, and in particular to an engine for a straddle-type vehicle.

An engine for a straddle-type vehicle is provided with a generator with motor function. The generator with motor function is attached to an end portion of a crankshaft protruding from a crankcase. This type of engine is provided with a plurality of types of sensors for detecting the rotation phase and the absolute rotation position of the crankshaft or of the rotor of the generator with motor function.

EP 2 830 199 A2 discloses a rotating electric machine suitable for use as a starter-generator of an engine of a saddle-ride type vehicle. A magnetic sensor element is incorporated in a case main body of a magnetic sensor unit for detecting the rotational position of a rotor. An extension portion is provided to a permanent magnet. The extension portion extends toward an engine beyond an end surface at an engine side of teeth of a stator. The magnetic sensor element is arranged closer to the engine than an end surface at the engine side of the extension portion of the permanent magnet is to the engine. The magnetic sensor element is arranged such that it is at least partially located within a range in the radial direction from an inner circumferential end surface of the permanent magnet.

WO 2016/103619 A1 discloses device capable of accurately positioning a sensor in a prescribed position. A rotation position detection device for detecting a change in the magnetic flux of a rotor of a rotating electrical machine has a case. The case has a container for accommodating an electrical circuit component. A bottom wall of the container has radial ribs extending radially on the top of the bottom wall. The case has a plate-like reinforcement rib extending between a cover for accommodating a sensor and the bottom wall. A connection part has two end part connection parts and intermediate connection parts provided therebetween. The intermediate connection parts keep an internal wall and tightening part in a prescribed positional relationship. The suppression of the deformation of the case suppresses the positional displacement of the sensor.

US 2003/140881 A1 discloses an engine starting control apparatus that causes a crankshaft of an engine to rotate reversely to a predetermined position immediately after the engine is stopped to make preparations for next starting of the engine. This action is performed in order to prevent firing by useless ignition upon forward rotation of the crankshaft when the engine is started again. When the engine restarted, the engine starting control apparatus causes the engine to rotate forwardly from the predetermined position. The apparatus includes a starter motor connected to the crankshaft, a reverse rotation means capable of rotating the engine reversely to a predetermined position, an ignition device for igniting the engine in the proximity of the top dead center of a piston, and an ignition suppression device for inhibiting the ignition of the engine for a predetermined period of time after the forward rotation of the engine.

For example, the generator described in JP 2015 100221 A is provided with a rotation phase sensor and an absolute rotation position sensor. The rotation phase sensor and the absolute rotation position sensor are fixed to an end surface of the stator and are disposed between teeth of the stator. A magnet is attached on the rotor and the rotation phase sensor detects the phase of the rotor by detecting changes in the magnetic flux of the magnet due to the rotation of the rotor. The absolute rotation position sensor detects the absolute position of the rotor by detecting changes in the magnetic flux of the magnet due to the rotation of the rotor.

The abovementioned sensors are disposed in the vicinity of the crankshaft. Therefore, the sensors are exposed to a high-temperature environment. As a result it is desirable to reduce the thermal effect on the sensors as much as possible.

It is an object of the present invention is to reduce the thermal effect on a sensor in an engine provided with a generator with motor function. According to the present invention said object is solved by an engine having the features of independent claim 1. Preferred embodiments are laid down in the dependent claims.

An engine according to an aspect of the present invention includes a crankcase, a crankshaft, a cooling device, and a generator with motor function. The crankshaft includes an end portion disposed outside of the crankcase. The crankshaft is housed in the crankcase and rotates around an axis of the crankshaft. The cooling device includes a cooling fan and a cooling housing. The cooling fan is attached to the end portion of the crankshaft. The cooling housing houses the cooling fan. The generator with motor function is housed in the cooling housing and is disposed between the crankcase and the cooling fan in the axial direction of the crankshaft.

The cooling fan is a centrifugal fan disposed coaxially with the crankshaft. The cooling housing includes an exhaust port disposed in the centrifugal direction of the cooling fan. The exhaust port includes a first exhaust port end and a second exhaust port end. The first exhaust port end is one of the end portions of the exhaust port in the circumferential direction of the cooling fan. The second exhaust port end is the other end portion of the exhaust port in the circumferential direction of the cooling fan.

The generator with motor function includes a rotor, a stator, and a sensor unit. The rotor is connected to the end portion of the crankshaft. The stator is fixed to the crankcase and faces the rotor. The sensor unit is attached to the stator. The stator includes a plurality of teeth disposed in the circumferential direction with gaps therebetween. The gaps include a first gap and a second gap.

The sensor unit includes a first sensor and a second sensor. The first sensor is disposed in the first gap. The second sensor is disposed in the second gap. The first sensor is longer than the second sensor in the axial direction in which the axis extends. A virtual line which extends in the centrifugal direction from the center of the cooling fan and passes through the first exhaust port end as seen from the axial direction is defined as a first boundary line. A virtual line which extends in the centrifugal direction from the center of rotation of the cooling fan and passes through the second exhaust port end as seen from the axial direction is defined as a second boundary line. The region in which the exhaust port is disposed among the two regions demarcated by the first boundary line and the second boundary line as seen from the axial direction in the cooling device, is defined as a first region. The other region among the two regions demarcated by the first boundary line and the second boundary line as seen from the axial direction in the cooling device, is defined as a second region. The first sensor is disposed in the second region as seen from the axial direction.

Because the first sensor is longer than the second sensor in the engine according to the present aspect, the size of the heat receiving surface area is easily increased and the first sensor is greatly affected by heat. The first sensor is disposed in the second region as seen from the axial direction. The cooling air flows easily in the second region because the cooling air in the second region is less likely to be interfered with by the exhaust than in the first region in which the exhaust port is provided. As a result, the first sensor which is more strongly affected by heat than the second sensor can be effectively cooled by the cooling air.

The first sensor may be shifted in the axial direction with respect to the exhaust port. While the air does not flow easily at the position shifted in the axial direction with respect to the exhaust port, the air flows more easily in the abovementioned second region than the first region among the two regions. By disposing the first sensor at this position, the first sensor can be effectively cooled by the cooling air.

The second sensor is disposed in the first region as seen from the axial direction. In this case, there is no need to dispose the second sensor in the second region in the same way as the first sensor. As a result, the freedom of design for the layout of the sensor unit can be improved. Moreover, because the second sensor is shorter than the first sensor, the thermal effect is suppressed even if the second sensor is disposed in a position that receives very little of the cooling air.

The sensor unit may overlap the cooling fan as seen from the axial direction. At least a portion of the exhaust port may be disposed under the cooling fan. The first sensor may be disposed above the second sensor. In this case, the first sensor is disposed above and further away from the exhaust port in comparison to when the first sensor is disposed below the second sensor. As a result, the first sensor is disposed away from a position in the vicinity of the exhaust port where the air tends to stay. Consequently, the first sensor receives even more of the cooling air.

The sensor unit may include a plurality of sensors including the first sensor and the second sensor. The first sensor may be disposed the furthest upward among the plurality of sensors. In this case, the first sensor is disposed above and further away from the exhaust port in comparison to when the first sensor is disposed below the other sensors. As a result, the first sensor is disposed away from a position near the exhaust port where the air tends to stay. Consequently, the first sensor receives even more of the cooling air.

The exhaust port may be disposed below the center of rotation of the cooling fan. The first sensor may be disposed above the center of rotation of the cooling fan. In this case, the first sensor is disposed above and further away from the exhaust port in comparison to when the first sensor is disposed below the center of rotation of the cooling fan. As a result, the first sensor is disposed away from a position near the exhaust port where the air tends to stay. Consequently, the first sensor receives even more of the cooling air.

The first sensor may be the longest in the axial direction among the plurality of sensors. In this case, the first sensor that is the most strongly affected by heat among the plurality of sensors can be cooled effectively.

The sensor unit may include a coupling portion that extends in the circumferential direction of the stator and that couples the plurality of sensors. A portion of the coupling portion may be disposed in the first region as seen from the axial direction. In this case, there is no need to dispose the coupling portion in the second region in the same way as the first sensor. As a result, the freedom of design for the layout of the sensor unit can be improved.

The stator may include a stator coil. The engine may further include a coil cable, a sensor cable, and a bracket. The coil cable may be connected to the stator coil. The sensor cable may be connected to the sensor unit. The bracket may bundle the coil cable and the sensor cable together. The coil cable may extend upward from the stator. A connecting portion of the sensor unit and the sensor cable may be disposed above the center of rotation of the stator.

In this case, the sensor cable and the coil cable bundled together by the bracket can be positioned so as to extend upward from a position above the center of rotation of the stator. As a result, the disposition of the coil cable is facilitated in comparison to when the bundled sensor cable and the coil cable extend upward from a position below the center of rotation of the stator.

The coil cable may extend forward from the stator. A connecting portion of the sensor unit and the sensor cable may be disposed above the center of rotation of the stator. In this case, the sensor cable and the coil cable bundled together by the bracket can be positioned so as to extend forward from a position above the center of rotation of the stator. As a result, the disposition of the coil cable is facilitated in comparison to when the bundled sensor cable and the coil cable extend forward from a position below the center of rotation of the stator.

The upper end of the sensor unit may be positioned above the center of rotation of the stator as seen from the axial direction. The lower end of the sensor unit may be positioned below the center of rotation of the stator. In this case, the installation of cables connected to the sensor unit is facilitated in comparison to when the sensor unit is disposed disproportionately below or above the center of rotation.

The gaps may further include a third gap positioned between the first gap and the second gap in the circumferential direction of the stator. The third gap may be disposed between the first sensor and the first boundary line in the circumferential direction of the cooling fan as seen from the axial direction. In this case, the first sensor is disposed away from the first boundary line in the second region. The air blown by the cooling fan is affected by the air exhausted from the exhaust port in the vicinity of the first boundary line. As a result, the air flow stagnates and the flow deteriorates in the vicinity of the first boundary line. Therefore, the first sensor is disposed away from the first boundary line thereby avoiding the disturbance of the air flow in the vicinity of the first boundary line, and the first sensor can be cooled more effectively by the cooling air.

An opening for exhausting the air flow generated by the cooling fan may not be provided in the second region. In this case, the cooling air flows easily in the second region because the cooling air is less likely to be interfered with due to the exhausting in the second region than in the first region in which the exhaust port is provided. As a result, the first sensor can be effectively cooled by the cooling air.

The first exhaust port end may be an end portion on the downstream side of the exhaust port in the rotating direction of the cooling fan. The second exhaust port end may be an end portion on the upstream side of the exhaust port in the rotating direction of the cooling fan.

The sensor unit may be disposed facing the crankcase in the axial direction. The crankcase may include a rib disposed in a position overlapping the sensor unit as seen from the axial direction. In this case, the gap between the crankcase and the sensor unit is narrowed by the rib. Consequently, the speed of the air flow in the vicinity of the sensor unit increases thereby improving the cooling effect on the sensor unit.

FIG. 1 is a side view of the straddle-type vehicle according to an embodiment.
FIG. 2 is a cross-sectional view of an engine according to an embodiment.
FIG. 3 is a view of a cooling fan as seen from the axial direction.
FIG. 4 is an enlarged cross-sectional view around a generator with motor function and the cooling fan.
FIG. 5 is a view of a stator as seen from a first end portion of the crankshaft toward a second end portion.
FIG. 6 is a view of the stator as seen from the second end portion of the crankshaft toward the first end portion.
FIG. 7 is a view of the stator, a sensor unit, and a portion of the crankcase as seen from the radial direction of the stator.
FIG. 8 is a view of the crankcase, the stator, and the sensor unit as seen from the axial direction.
FIG. 9 is a cross sectional view along line IX-IX in FIG. 2.
FIG. 10 is a cross-sectional view along line X-X in FIG. 9.
FIG. 11 is a schematic view of a modified example of the disposition of the sensor unit and the exhaust port.
FIG. 12 is a schematic view of a modified example of the disposition of the sensor unit and the exhaust port.
FIG. 13 is a schematic view of a modified example of the disposition of the sensor unit and the exhaust port.
FIG. 14 is a schematic view of a modified example of the disposition of the sensor unit and the exhaust port.
FIG. 15 is a schematic view of a modified example of the disposition of the sensor unit and the exhaust port.
FIG. 16 is a schematic view of a modified example of the disposition of the sensor unit and the exhaust port.

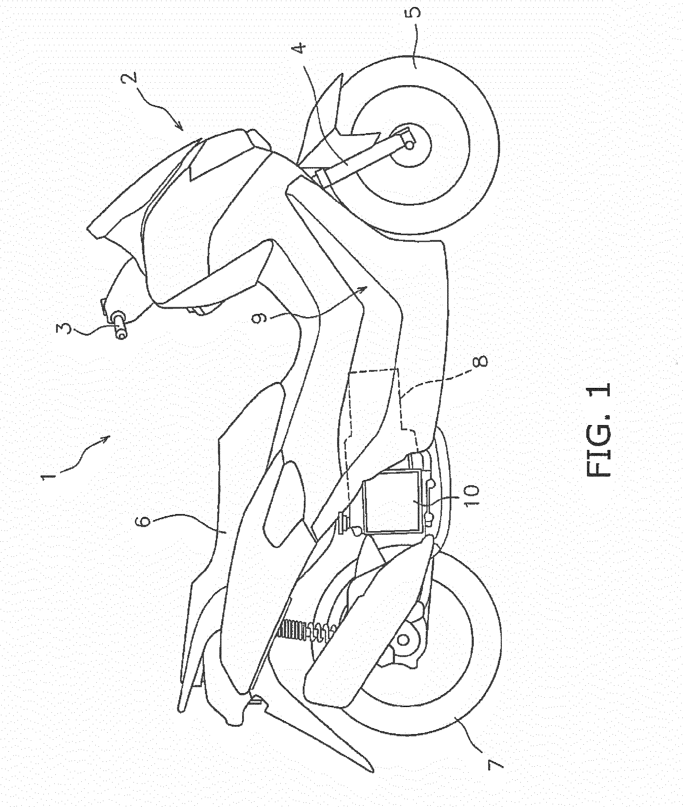

The following is a description of an engine according to the present embodiment with reference to the drawings. FIG. 1 is a side view of a straddle-type vehicle 1 on which the engine according to the present embodiment is mounted. The straddle-type vehicle 1 according to the present embodiment is a scooter-type vehicle. As illustrated in FIG. 1, the straddle-type vehicle 1 includes a vehicle body 2, a handle 3, a steering device 4, a front wheel 5, a seat 6, a rear wheel 7, and an engine 8.

The handle 3 is coupled to the front wheel 5 via the steering device 4. The seat 6 is supported on the vehicle body 2. A foot board 9 is disposed in front of and below the seat 6. The foot board 9 has a shape in which the middle part in the vehicle width direction protrudes upward. The foot board 9 may have a flat shape.

The engine 8 is disposed under the seat 6. The engine 8 is supported in a swingable manner on the vehicle body 2. The following describes in detail the structure of the engine 8. The up, down, left, right, front, and rear directions in the following explanation signify the directions while the engine 8 is mounted on the straddle-type vehicle 1.

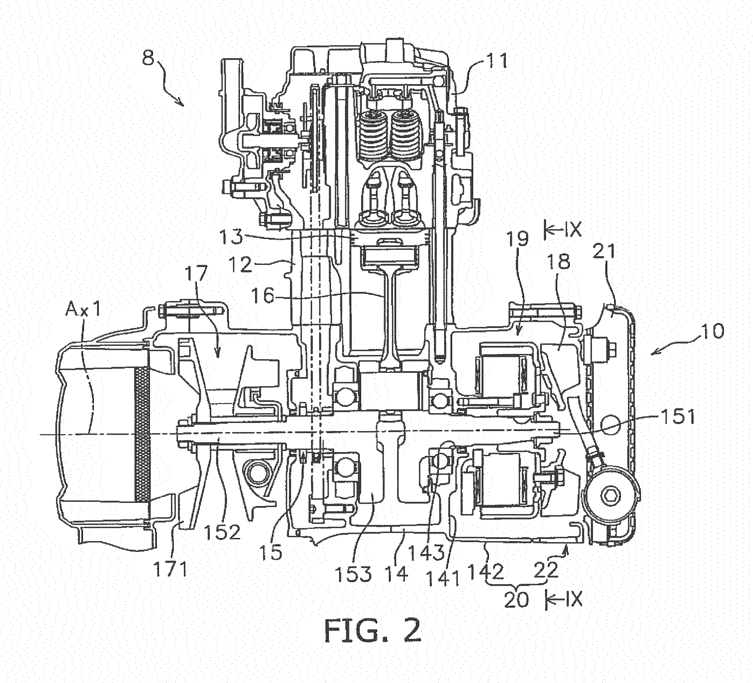

FIG. 2 is a cross-sectional view of the engine 8. As illustrated in FIG. 2, the engine 8 includes a cylinder head 11, a cylinder 12, a piston 13, a crankcase 14, and a crankshaft 15. The cylinder head 11 is connected to the cylinder 12. The cylinder 12 is connected to the crankcase 14. The piston 13 is disposed inside the cylinder 12. The crankshaft 15 is coupled to the piston 13 via a connecting rod 16. The crankshaft 15 is housed in the crankcase 14 and rotates around an axis Ax1 of the crankshaft 15. In the following explanation, the "axial direction" signifies the direction in which the axis Ax1 of the crankshaft 15 extends.

The crankshaft 15 includes a first end portion 151, a second end portion 152, and a crank web 153. The crank web 153 is positioned between the first end portion 151 and the second end portion 152 and is disposed inside the crankcase 14. The first end portion 151 protrudes one way in the axial direction from the crankcase 14 and is disposed outside of the crankcase 14. The second end portion 152 protrudes the other way in the axial direction from the crankcase 14 and is disposed outside of the crankcase 14. The second end portion 152 is coupled to a drive pulley 171 of a transmission 17.

The engine 8 includes a cooling fan 18 and a generator with motor function 19. The cooling fan 18 is attached to the first end portion 151 of the crankshaft 15. The generator with motor function 19 is disposed between the crankcase 14 and the cooling fan 18 in the axial direction. The engine 8 includes a radiator 21. The radiator 21 is disposed outside of the cooling fan 18 in the axial direction. The radiator 21 overlaps the cooling fan 18 as seen in the axial direction.

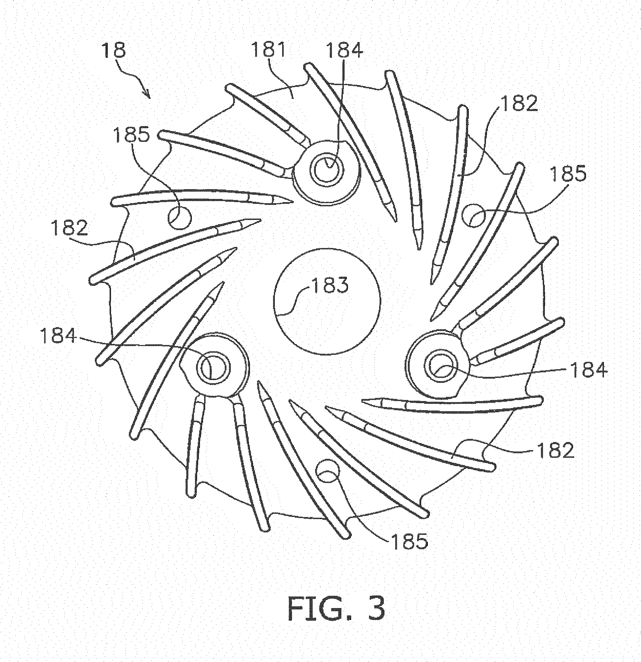

FIG. 3 is a view of the cooling fan 18 as seen from the axial direction. The cooling fan 18 is disposed coaxially with the crankshaft 15. The cooling fan 18 is a centrifugal fan for blowing air taken in from the axial direction in the centrifugal direction. As illustrated in FIG. 3, the cooling fan 18 includes a disk-shaped fan body 181 and a plurality of vane portions 182. In the drawings, only a portion of the vane portions 182 are provided with the reference numeral 182.

An opening 183 through which the crankshaft 15 passes is provided in the center of the fan body 181. A plurality of fixing holes 184 are provided in the fan body 181. Bolts for fixing the cooling fan 18 to a belowmentioned rotor 24 are inserted through the fixing holes 184. A plurality of through-holes 185 through which air can pass are provided in the fan body 181. The plurality of vane portions 182 are disposed on the fan body 181. The tips of the plurality of vane portions 182 protrude in the radial direction from the fan body 181. The centrifugal direction of the cooling fan 18 signifies the direction from the center of the fan body 181 toward the outside in the radial direction of the fan body 181.

As illustrated in FIG. 2, the crankcase 14 includes a side wall portion 141 and a cover portion 142. The side wall portion 141 covers the crank web 153. The side wall portion 141 includes a hole 143 through which the crankshaft 15 passes. The cover portion 142 protrudes in the axial direction from the side wall portion 141.

The engine 8 includes a housing member 22. The housing member 22 is attached to the side wall portion 141 of the crankcase 14. The housing member 22 overlaps the crankcase 14 as seen from the axial direction. A cooling housing 20 for housing the generator with motor function 19 and the cooling fan 18 is configured by the cover portion 142 of the crankcase 14 and the housing member 22. The cooling housing 20 and the cooling fan 18 configure a cooling device 10.

The generator with motor function 19 is connected to an electrical circuit that is not illustrated. Electrical power is supplied from the electric circuit whereby the generator with motor function 19 functions as a motor. The generator with motor function 19 functions as a starter motor for starting the engine 8. The generator with motor function 19 may function as an assist motor for supplementing the driving power of the engine 8. Moreover, the generator with motor function 19 is able to function as a generator. The generator with motor function 19 supplies electrical power to the electric circuit when functioning as the generator.

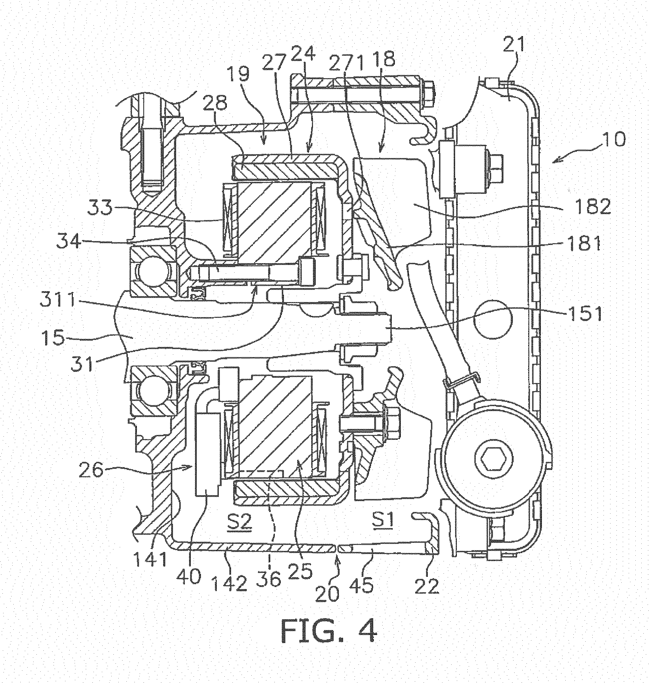

FIG. 4 is an enlarged cross-sectional view around the generator with motor function 19 and the cooling fan 18. As illustrated in FIG. 4, the generator with motor function 19 includes the rotor 24, a stator 25, and a sensor unit 26.

The rotor 24 is connected to the first end portion 151 of the crankshaft 15 and rotates with the crankshaft 15. The rotor 24 includes a rotor core 27 and a permanent magnet 28. The rotor core 27 has a cylindrical shape and opens toward the crankcase 14. The permanent magnet 28 is attached to the internal circumferential surface of the rotor core 27. Moreover, a plurality of through-holes 271 are provided in the rotor core 27 to allow for the passage of air. The through-holes 271 penetrate the rotor core 27 in the axial direction.

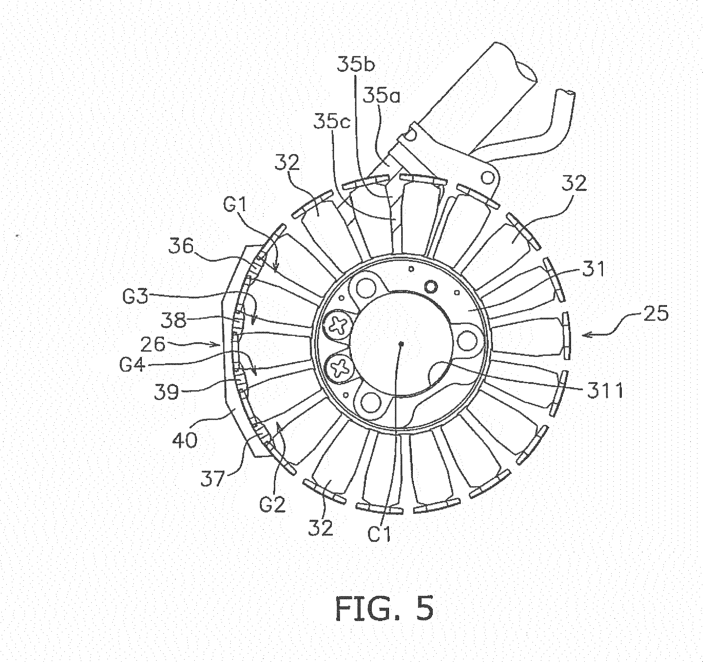

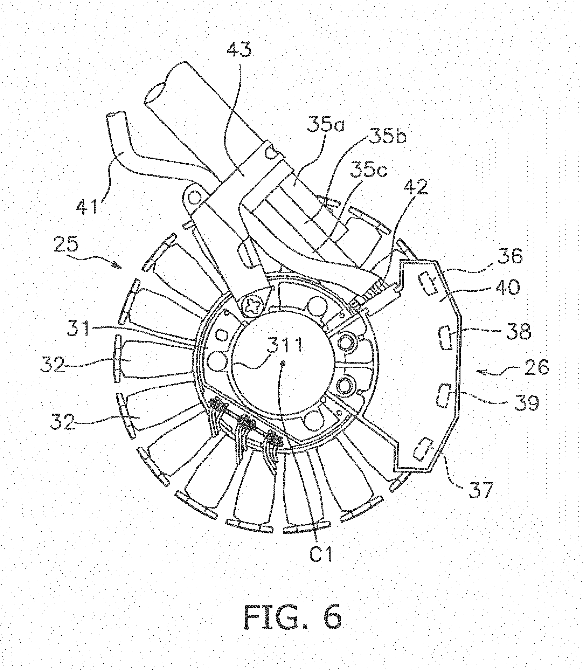

The stator 25 is fixed to the crankcase 14 and faces the rotor 24. FIG. 5 is a view of the stator 25 as seen in the direction from the first end portion 151 toward the second end portion 152 of the crankshaft 15. FIG. 6 is a view of the stator 25 as seen in the direction from the second end portion 152 toward the first end portion 151 of the crankshaft 15. As illustrated in FIGS. 5 and 6, the stator 25 includes a stator core 31 and a plurality of teeth 32. In the drawings, only a portion of the plurality of teeth 32 are provided with the reference numeral 32.

The stator core 31 includes an opening 311 through which the first end portion 151 of the crankshaft 15 passes. As illustrated in FIG. 4, the stator core 31 is fixed by a bolt 34 to the side wall portion 141 of the crankcase 14. The plurality of teeth 32 extend in the radial direction from the stator core 31. The plurality of teeth 32 are disposed in the circumferential direction with gaps therebetween.

As illustrated in FIG. 4, the stator 25 includes a stator coil 33. The stator coil 33 is wound onto the plurality of teeth 32. The generator with motor function 19 is a three-phase motor and the stator coil 33 has three coil phases: a V-phase, a U-phase, and a W-phase. As illustrated in FIG. 6, a plurality of coil cables 35a, 35b, 35c connected to each coil phase extend upward and forward from the stator core 31.

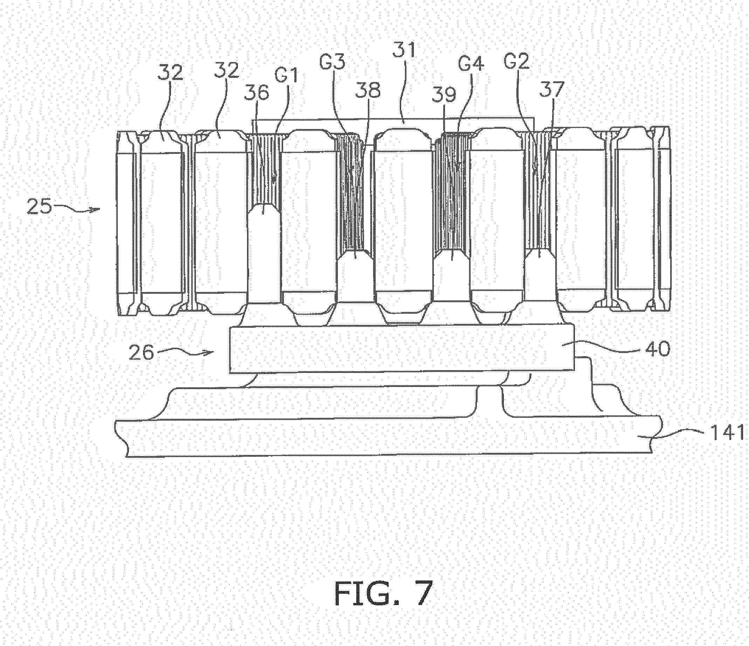

The sensor unit 26 is attached to the stator 25. FIG. 7 is a view of the stator 25 and the sensor unit 26 as seen from the radial direction of the stator 25. As illustrated in FIGS. 5 and 7, the sensor unit 26 includes a plurality of sensors 36-39 and a coupling portion 40.

The plurality of sensors 36-39 includes a first sensor 36, a second sensor 37, a third sensor 38, and a fourth sensor 39. A plurality of gaps between the abovementioned plurality of teeth 32 includes a first gap G1, a second gap G2, a third gap G3, and a fourth gap G4. The first to fourth gaps G1-G4 are aligned in the circumferential direction. The first sensor 36 is disposed in the first gap G1. The second sensor 37 is disposed in the second gap G2. The third sensor 38 is disposed in the third gap G3. The fourth sensor 39 is disposed in the fourth gap G4.

The first to fourth sensors 36-39 are magnetic sensors. For example, the first to fourth sensors 36-39 are Hall sensors. The first sensor 36 detects the absolute position of the rotor 24 by detecting changes in the magnetic flux of the permanent magnet 28 caused by the rotation of the rotor 24. The second to fourth sensors 37-39 detect the phases of the rotor 24 by detecting changes in the magnetic flux of the permanent magnet 28 caused by the rotation of the rotor 24.

As illustrated in FIG. 5, the first to fourth sensors 36-39 are positioned rearward of the center of rotation C1 of the stator 25. The first to fourth sensors 36-39 are positioned rearward of the stator core 31.

The first sensor 36 is disposed the furthest upward among the plurality of sensors 36-39. The first sensor 36 is disposed above the center of rotation C1 of the stator 25. That is, the first sensor 36 is disposed above the center of rotation of the cooling fan 18. The first sensor 36 is disposed above the opening 311 of the stator core 31.

The second sensor 37 is disposed the furthest downward among the plurality of sensors 36-39. The second sensor 37 is disposed below the center of rotation C1 of the stator 25. The second sensor 37 is disposed below the opening 311 of the stator core 31. The third sensor 38 is disposed above the center of rotation C1 of the stator 25. The fourth sensor 39 is disposed below the third sensor 38. The fourth sensor 39 is disposed below the center of rotation C1 of the stator 25.

As illustrated in FIG. 7, the length of the first sensor 36 is the greatest among the plurality of sensors 36-39 in the axial direction. The lengths of the second to fourth sensors 37-39 are the same in the axial direction. However, the lengths of the second to fourth sensors 37-39 may be different from each other.

The coupling portion 40 couples the first to fourth sensors 36-39. The coupling portion 40 is connected to the first to fourth sensors 36-39. As illustrated in FIG. 6, the coupling portion 40 extends in the circumferential direction of the stator 25. The coupling portion 40 overlaps the first to fourth gaps G1-G4 as seen in the axial direction. The first to fourth sensors 36-39 extend in the axial direction from the coupling portion 40. The coupling portion 40 faces the crankcase 14. The coupling portion 40 is disposed between the stator 25 and the side wall portion 141 of the crankcase 14.

The upper end of the sensor unit 26 is positioned above the center of rotation C1 of the stator 25 as seen from the axial direction. The lower end of the sensor unit 26 is positioned below the center of rotation C1 of the stator 25. The upper end of the sensor unit 26 is positioned above the opening 311 of the stator 25 and the lower end of the sensor unit is positioned below the opening 311 of the stator 25 as seen from the axial direction.

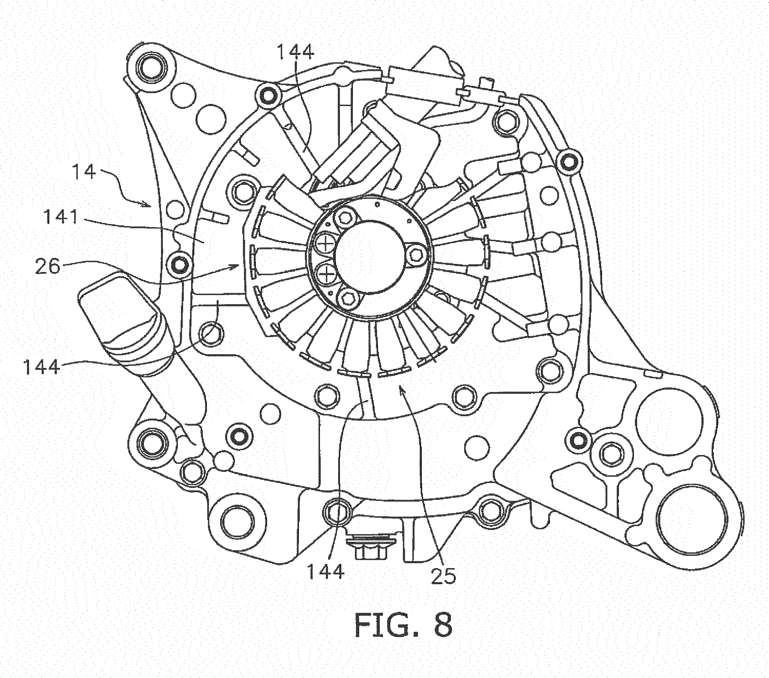

The sensor unit 26 is disposed facing the side wall portion 141 of the crankcase 14. FIG. 8 is a view of the crankcase 14, the stator 25, and the sensor unit 26 as seen from the axial direction. As illustrated in FIGS. 6 and 8, the side wall portion 141 of the crankcase 14 includes ribs 144 that protrude toward the sensor unit 26. As illustrated in FIG. 8, the ribs 144 are disposed in positions that overlap the sensor unit 26 as seen from the axial direction.

As illustrated in FIG. 6, a sensor cable 41 is connected to the sensor unit 26. The sensor cable 41 extends forward and upward from the sensor unit 26. A connecting portion 42 of the sensor unit 26 and the sensor cable 41 is disposed above the center of rotation C1 of the stator 25. The coil cables 35a, 35b, 35c and the sensor cable 41 are bundled together with a bracket 43. The bracket 43 is attached to the stator core 31.

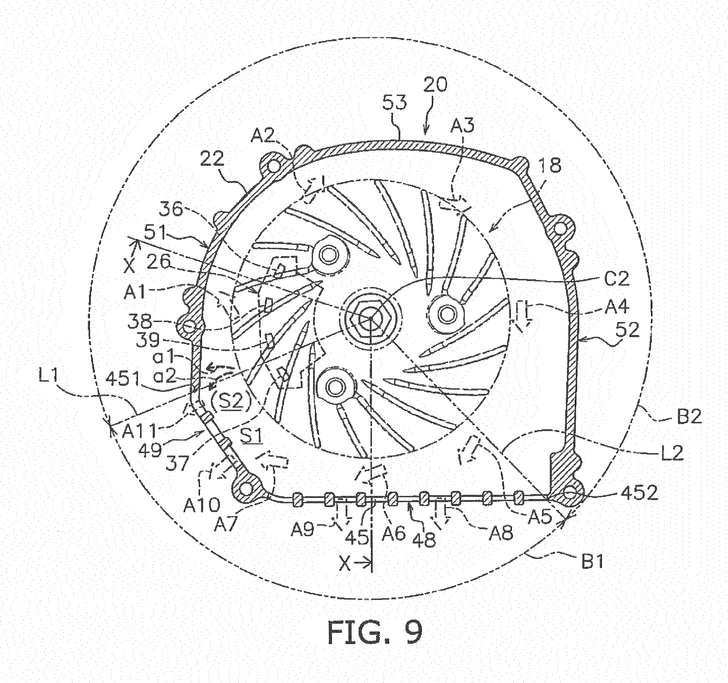

FIG. 9 is a cross sectional view along line IX-IX in FIG. 2. As illustrated in FIG. 9, the cooling housing 20 includes an exhaust port 45 disposed in the centrifugal direction of the cooling fan 18. The exhaust port 45 is provided in the housing member 22. However, the exhaust port 45 may be provided in a portion of the crankcase 14.

The exhaust port 45 includes a first exhaust port end 451 and a second exhaust port end 452. The first exhaust port end 451 is one end portion of the exhaust port 45 in the circumferential direction of the cooling fan 18. The second exhaust port end 452 is the other end portion of the exhaust port 45 in the circumferential direction of the cooling fan 18. Specifically, the first exhaust port end 451 is an end portion on the downstream side of the exhaust port 45 in the rotating direction of the cooling fan 18. The second exhaust port end 452 is an end portion on the upstream side of the exhaust port 45 in the rotating direction of the cooling fan 18.

A virtual line which extends in the centrifugal direction from the center of rotation C2 of the cooling fan 18 and passes through the first exhaust port end 451 as seen from the axial direction is defined as a first boundary line L1. A virtual line which extends in the centrifugal direction from the center of rotation C2 of the cooling fan 18 and passes through the second exhaust port end 452 as seen from the axial direction is defined as a second boundary line L2. The region in which the exhaust port 45 is disposed among the two regions demarcated by the first boundary line L1 and the second boundary line L2 as seen from the axial direction, is defined as a first region B1 in the cooling device 10. The other region among the two regions demarcated by the first boundary line L1 and the second boundary line L2 as seen from the axial direction, is defined as a second region B2 in the cooling device 10.

The second region B2 in the present embodiment is a region other than the first region B1 in the cooling housing 20. However, the second region B2 may be a portion of the region other than the first region B1 in the cooling housing 20. An opening for exhausting the air flow generated by the cooling fan 18 is not provided in the second region B2. However, openings not intended as openings for exhausting air flow, such as screw holes or small gaps between components, may be provided in the second region B2.

The exhaust port 45 is disposed below the center of rotation C2 of the cooling fan 18. A portion of the exhaust port 45 is disposed under the cooling fan 18. The exhaust port 45 overlaps the cooling fan 18 as seen from below.

Specifically, the cooling housing 20 includes a bottom portion 48 and a lower side portion 49. The bottom portion 48 is positioned under the cooling fan 18 as seen from the axial direction. The lower side portion 49 is a portion that extends diagonally upward from the bottom portion 48 as seen from the axial direction. The upper end of the lower side portion 49 is positioned above the lower end of the cooling fan 18. The exhaust port 45 is provided in the bottom portion 48 and the lower side portion 49. The bottom portion 48 and the lower side portion 49 are disposed in the first region B1 as seen from the axial direction.

The cooling housing 20 includes a first side portion 51, a second side portion 52, and an upper portion 53. The first side portion 51 is disposed in one way in the horizontal direction with respect to the cooling fan 18 as seen from the axial direction. The second side portion 52 is disposed in the other way in the horizontal direction with respect to the cooling fan 18 as seen from the axial direction. The first side portion 51 is disposed above the lower side portion 49 as seen from the axial direction. The first side portion 51 is joined to the lower side portion 49. The upper portion 53 is disposed above the cooling fan 18 as seen from the axial direction. The first side portion 51, the second side portion 52, and the upper portion 53 are disposed in the second region B2.

As illustrated in FIG. 4, the stator 25 is shifted in the axial direction with respect to the exhaust port 45. That is, the stator 25 is disposed in a position that does not overlap the exhaust port 45 as seen from the radial direction of the stator 25. A space S1 in which the cooling fan 18 is disposed within the cooling housing 20 is referred to hereinbelow as a "fan space S1." Moreover, a space S2 in which the stator 25 is disposed within the cooling housing 20 is referred to as a "stator space S2." The stator space S2 is spaced away from the cooling fan 18 and the exhaust port 45 in the axial direction.

The sensor unit 26 overlaps the cooling fan 18 as seen from the axial direction. The sensor unit 26 is shifted in the axial direction with respect to the exhaust port 45. The sensor unit 26 is disposed in the stator space S2. The sensor unit 26 is disposed further to the inside than the exhaust port 45 in the axial direction. The exhaust port 45 is disposed further to the outside than the sensor unit 26 in the axial direction. That is, the sensor unit 26 is disposed in a position that does not overlap the exhaust port 45 as seen from the radial direction of the stator 25. Therefore, the first to fourth sensors 36-39 are shifted in the axial direction with respect to the exhaust port 45. The first to fourth sensors 36-39 are disposed in a position that does not overlap the exhaust port 45 as seen from the radial direction of the stator 25.

As illustrated in FIG. 9, the first sensor 36 is disposed in the second region B2 as seen from the axial direction. The first sensor 36 is disposed in a position that overlaps the first side portion 51 in the centrifugal direction as seen from the axial direction.

The disposition of a given element in a position that overlaps a portion of the cooling housing 20 in the centrifugal direction as seen from the axial direction signifies that a virtual line extending through the element in the centrifugal direction overlaps the portion of the cooling housing 20 as seen from the axial direction.

The second sensor 37 is disposed in the first region B1 as seen from the axial direction. The second sensor 37 is disposed in a position that overlaps the lower side portion 49 in the centrifugal direction as seen from the axial direction.

The third sensor 38 is disposed in the second region B2 as seen from the axial direction. The third sensor 38 is disposed in a position that overlaps the first side portion 51 in the centrifugal direction as seen from the axial direction. The third sensor 38 is disposed between the first sensor 36 and the first boundary line L1 in the circumferential direction of the cooling fan 18. Therefore, the third gap G3 is disposed between the first sensor 36 and the first boundary line L1 in the circumferential direction of the cooling fan 18.

The fourth sensor 39 is disposed in the second region B2 as seen from the axial direction. The fourth sensor 39 is disposed in a position that overlaps the first side portion 51 in the centrifugal direction as seen from the axial direction. The fourth sensor 39 is disposed between the first sensor 36 and the first boundary line L1 in the circumferential direction of the cooling fan 18. Therefore, the fourth gap G4 is disposed between the first sensor 36 and the first boundary line L1 in the circumferential direction of the cooling fan 18.

A portion of the coupling portion 40 is disposed in the first region B1 as seen from the axial direction. Another portion of the coupling portion 40 is disposed in the second region B2 as seen from the axial direction.

The cooling fan 18 in the engine 8 according to the present embodiment as discussed above generates an air flow that is sucked in from the axial direction of the cooling fan 18 and flows in the centrifugal direction and the circumferential direction of the cooling fan 18. The radiator 21 and the generator with motor function 19 are cooled due to the air flow generated by the cooling fan 18. Moreover, the sensor unit 26 is also cooled by the air flow. The following is an explanation of the air flow generated by the cooling fan 18.

The air is exhausted in the centrifugal direction in the vicinity of the exhaust port 45 in the fan space S1. As a result, the pressure of the air in the vicinity of the exhaust port 45 becomes lower than the pressure of the air upstream from the exhaust port 45 in the fan space S1. This type of pressure distribution around the cooling fan 18 and the speed component in the circumferential direction of the air blown by the cooling fan 18 allows the air to flow in the circumferential direction. As a result, the air flow blown from the cooling fan 18 flows along the first side portion 51, the upper portion 53, and the second side portion 52 in order as indicated by arrows A1 to A7, and then is exhausted from the exhaust port 45 as indicated by arrows A8-A11 in FIG. 9.

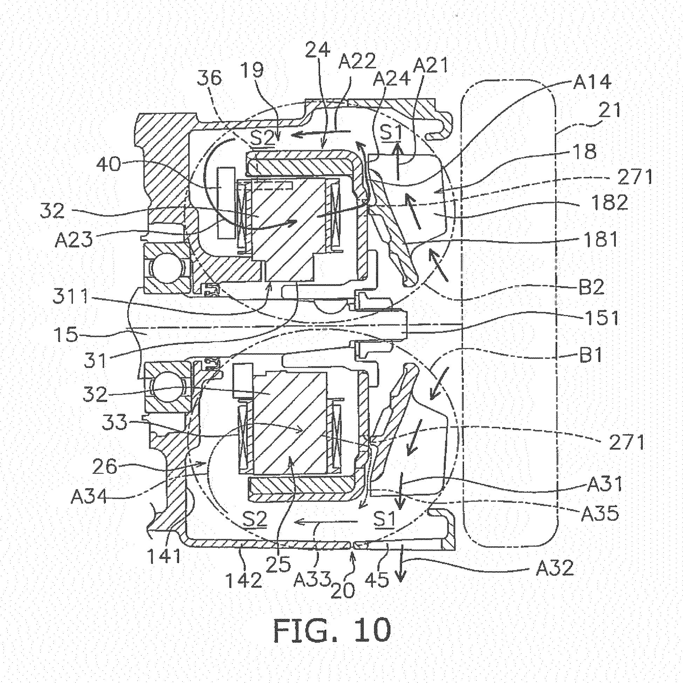

FIG. 10 is a cross-sectional view along line X-X in FIG. 9. The region below the crankshaft axis Ax1 is the first region B1, and the region above the crankshaft axis Ax1 is the second region B2 in FIG. 10. The first region B1 and the second region B2 are indicated schematically by chain double-dashed lines in FIG. 10.

As illustrated in FIG. 10, the air flowing in the centrifugal direction from the cooling fan 18 (arrows A21) is not immediately exhausted from the exhaust port 45 because the exhaust port 45 is not provided in the second region B2. Therefore, the pressure in the fan space S1 becomes higher than the pressure in the stator space S2 in the second region B2. As a result, the air flows from the fan space S1 toward the stator space S2 in the second region B2 as illustrated in FIG. 10 (arrow A22).

The high pressure air flows between the teeth 32 of the stator 25 (arrow A23) and passes through the through-holes 271 of the rotor 24 and flows out to the back side of the cooling fan 18 (arrow A24). Thereafter, the air flows out from the cooling fan 18 in the centrifugal direction. Because the air flow also has a speed component in the circumferential direction, the air flows in the circumferential direction even in the stator space S2.

As described above, the air flows easily from the fan space S1 to the stator space S2 and circulates between the fan space S1 and the stator space S2 due to the pressure difference in the fan space S1 and the stator space S2 in the second region B2 as mentioned above.

In contrast, the air blown out from the cooling fan 18 in the centrifugal direction (arrows A31) is quickly exhausted from the exhaust port 45 (arrow A32) in the first region B1. As a result, the pressure difference between the fan space S1 and the stator space S2 decreases and the air flow from the fan space S1 toward the stator space S2 grows weaker (arrow A33). Consequently, the flow circulating in the fan space S1 and the stator space S2 (arrows A33, A34, A35) grows weaker in the first region B1. As a result, the air in the first region B1 of the stator space S2 flows with more difficulty.

The first sensor 36 is disposed in the second region B2 of the stator space S2 in the present embodiment. Therefore, the first sensor 36 is disposed so as to avoid the first region B1 where the air flows with more difficulty in the stator space S2. As a result, the first sensor 36 which has a larger heat receiving surface area and is more strongly affected by heat than the second to fourth sensors 37-39, can be effectively cooled by the cooling air.

In particular, the first sensor 36 is disposed in a position that overlaps the first side portion 51 in the centrifugal direction as seen from the axial direction. The first side portion 51 is positioned the furthest upstream in the air flow in the circumferential direction of the cooling fan 18 among the first side portion 51, the upper portion 53, and the second side portion 52. Therefore, the air flows easily because the pressure difference increases the most at the position that overlaps the first side portion 51 in the centrifugal direction as seen from the axial direction. As a result, the first sensor 36 can be cooled effectively with the cooling air.

Furthermore, as illustrated in FIG. 9, the vicinity of the border between the first region B1 and the second region B2 is affected by air a1 and a2 blown from the cooling fan 18 due to the air A11 exhausted from the exhaust port 45. As a result, the air flow in the fan space S1 and the stator space S2 stagnates and the flow deteriorates. In the present embodiment, the third sensor 38 and the fourth sensor 39 (the third gap G3 and the fourth gap G4) are disposed between the first sensor 36 and the first boundary line L1. Therefore, the first sensor 36 is disposed away from the first boundary line L1. Consequently, first sensor 36 avoids the effect of the disturbance of the air flow in the vicinity of the first boundary line L1 and the cooling efficiency of the first sensor 36 can be improved.

The second sensor 37 is disposed in the first region B1. Therefore, the freedom of design for the layout of the sensor unit 26 can be improved in comparison to a case in which the second sensor 37 is disposed in the second region B2 in the same way as the first sensor 36. Moreover, because the second sensor 37 is shorter than the first sensor 36, the thermal effect is suppressed even if the second sensor 37 is disposed in a position that receives very little of the cooling air.

The coil cables 35a, 35b, and 35c and the sensor cable 41 extend upward and forward from the stator 25. Further, the connecting portion 42 of the sensor unit 26 and the sensor cable 41 is disposed above the center of rotation C1 of the stator 25. As a result, the sensor cable 41 and the coil cables 35a, 35b, and 35c bundled together by the bracket 43 can be disposed so as to extend upward and forward from a position above the center of rotation C1 of the stator 25. As a result, the disposition of the coil cables 35a, 35b, and 35c is facilitated in comparison to a case in which the bundled sensor cable 41 and coil cables 35a, 35b, and 35c extend upward and forward from a position below the center of rotation C1 of the stator 25. Moreover, the sensor cable 41 and the coil cables 35a, 35b, and 35c are not likely to overlap the exhaust port 45 in the centrifugal direction. Consequently, the cooling air can be exhausted smoothly.

The upper end of the sensor unit 26 is positioned above the center of rotation C1 of the stator 25 as seen from the axial direction. Moreover, the lower end of the sensor unit 26 is positioned below the center of rotation C1 of the stator 25. In this case, the installation of cables connected to the sensor unit 26 is facilitated in comparison to when the sensor unit 26 is disposed disproportionately below or above the center of rotation.

The ribs 144 disposed on the side wall portion 141 of the crankcase 14 are disposed in positions that overlap the sensor unit 26 as seen from the axial direction. As a result, the gap between the crankcase 14 and the sensor unit 26 is narrowed by the ribs 144. Consequently, the cooling effect on the sensor unit 26 is improved due to the speed of the air flow being increased in the vicinity of the sensor unit 26.

Although an embodiment of the present invention has been described so far, the present invention is not limited to the above embodiment and various modifications may be made within the scope of the invention as defined by the claims.

The straddle-type vehicle is not limited to a scooter-type vehicle and may be a moped or a sports type vehicle. The straddle-type vehicle is not limited to a motorcycle and may be an all-terrain vehicle or a snowmobile.

The position of the exhaust port 45 is not limited to the above embodiment and may be changed. For example, the exhaust port 45 may be provided not only on the cooling housing 20 but also on the crankcase 14.

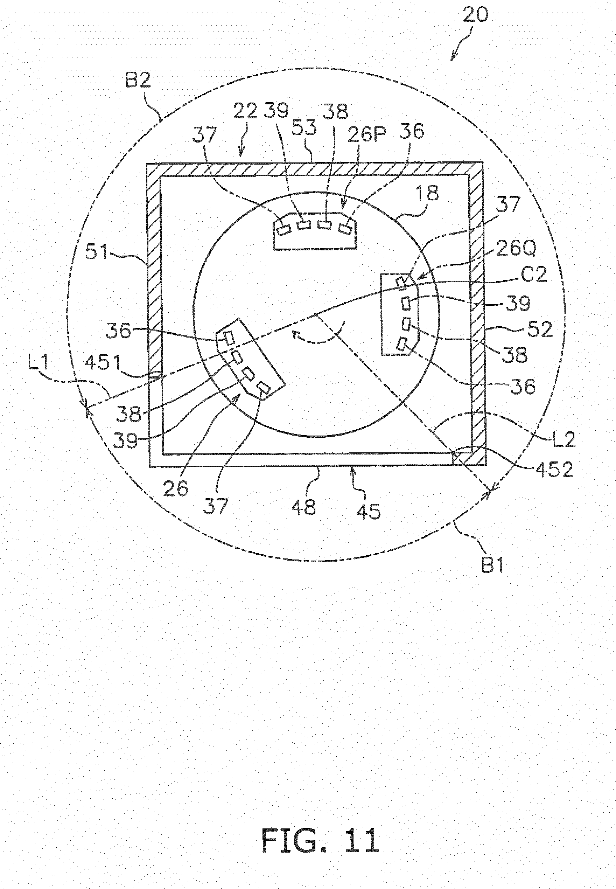

As illustrated in FIG. 11, the second to fourth sensors 37-39 may be disposed in the first region B1 so long as the first sensor 36 is disposed in the second region B2 in the sensor unit 26. Moreover, all of the first to fourth sensors 36-39 may be disposed in the second region B2 as in sensor units 26P and 26Q. The positions of the first exhaust port end 451 and the second exhaust port end 452 may be adjusted as appropriate.

The third sensor 38 (the third gap G3) may be disposed between the first sensor 36 and the first boundary line L1, and the fourth sensor 39 (fourth gap G4) may be disposed in the first region B1. The second to fourth sensors 37-39 may overlap the first boundary line L1 as seen from the axial direction.

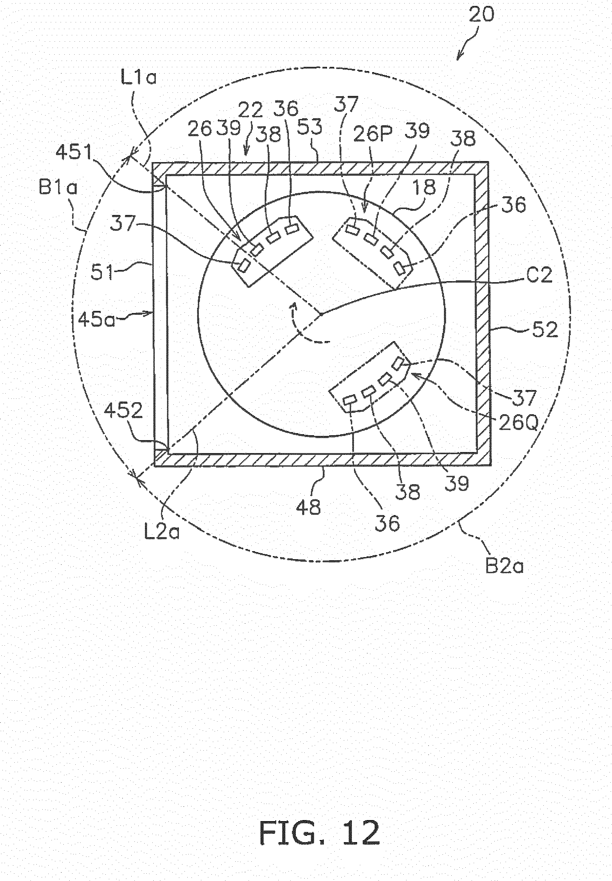

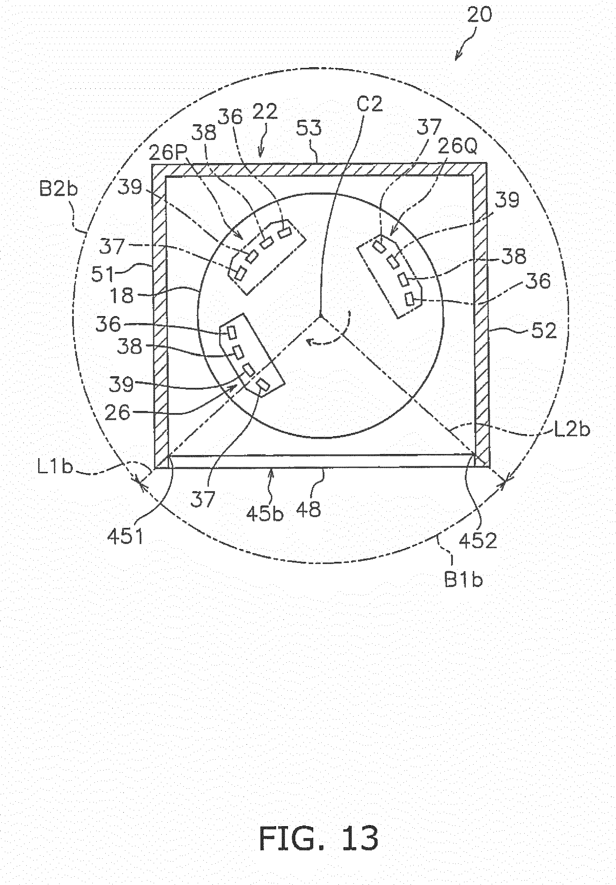

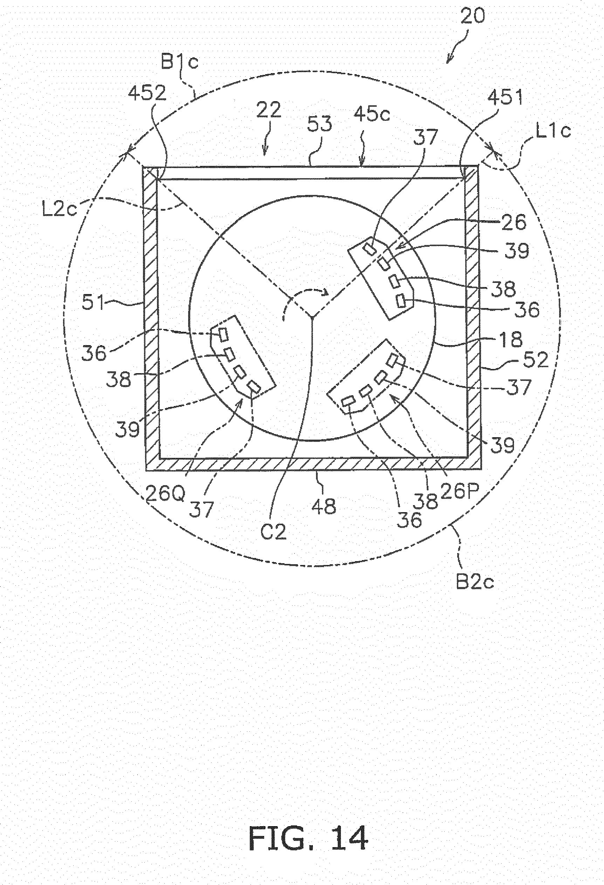

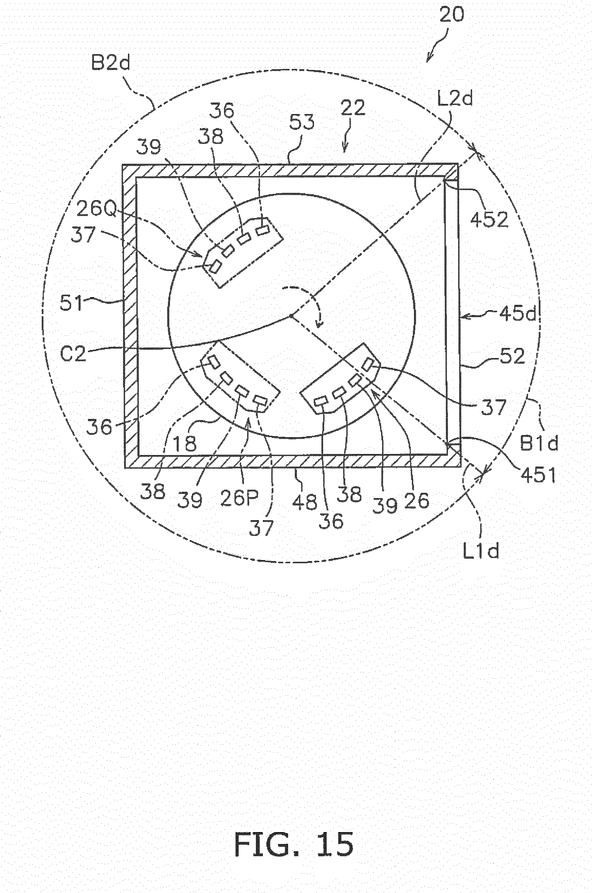

The exhaust port 45 is not limited to being disposed below the cooling fan 18 and may be disposed above, in front of, or to the rear of the cooling fan 18. For example as illustrated in FIG. 12, an exhaust port 45a may be disposed in the first side portion 51. Alternatively as illustrated in FIG. 13, an exhaust port 45b may be disposed only in the bottom portion 48. In this case, the entire exhaust port 45 may be disposed under the cooling fan 18 by omitting the lower side portion 49. Alternatively as illustrated in FIG. 14, an exhaust port 45c may be disposed in the upper portion 53. Alternatively as illustrated in FIG. 15, an exhaust port 45d may be disposed in the second side portion 52.

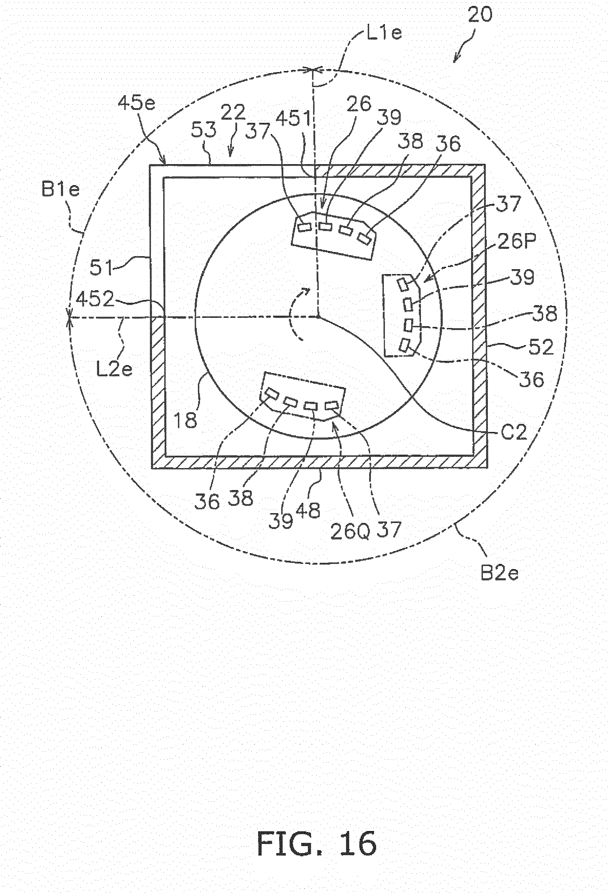

The exhaust port 45 does not necessarily need to be formed in only the first side portion 51, the bottom portion 48, the upper portion 53, or the second side portion 52. For example, the exhaust port 45 may be disposed across the first side portion 51 and the bottom portion 48 as described in the above embodiment. Alternatively as illustrated in FIG. 16, an exhaust port 45e may be disposed across the first side portion 51 and the upper portion 53.

As illustrated in FIGS 12 to 16, the first sensor 36 is disposed in the second region B2 (B2a-B2e) whereby a cooling effect can be achieved in the same way as in the above embodiment. Moreover, all of the first to fourth sensors 36-39 may be positioned in the second region B2 (B2a-B2e) as in sensor units 26P and 26Q.

The structure of the sensor unit 26 is not limited to the structure of the above embodiment and may be changed. For example, the number of sensors is not limited to four and may be two, three, or five or more. The sensors may be a type of sensor other than a Hall sensor. The coupling portion 40 may be omitted. The disposition of the sensors may be changed. The disposition of the sensor unit 26 may be changed.

The coil cables 35a, 35b, and 35c may extend straight up from the stator 25. The coil cables 35a, 35b, and 35c may extend straight in the forward direction from the stator 25.

The positions or the shapes of the ribs 144 on the crankcase 14 may be changed. Alternatively, the ribs 144 on the crankcase 14 may be omitted.

The cooling housing 20 may be formed only by the cover portion 142 by extending the cover portion 142 of the crankcase 14 in the axial direction. The cooling housing 20 may be formed only with the housing member 22. Various shapes may be selected for the shape of the cooling housing 20 so long as the area around the centrifugal fan and the generator with motor function is enclosed.

The engine is not limited to the water-cooling type engine 8 having the radiator 21 as in the above embodiment, and may be an air-cooling type engine in which the radiator 21 is omitted.

The wording and expressions used herein are used for explanation and are not to be used for a limited interpretation. Various modifications may be permitted within the scope of the claims of the present invention. Limitations of the claims should be interpreted broadly on the basis of the terms used in the claims and are not to be limited to embodiments described in the present description

## Claims

1. An engine (8) comprising:
a crankcase (14);
a crankshaft (15) including an end portion (151, 152) disposed outside of the crankcase (14), the crankshaft (15) housed in the crankcase (14) and rotating around an axis (Ax1) of the crankshaft (15);
a cooling device (10) including a cooling fan (18) attached to the end portion (151) of the crankshaft (15) and a cooling housing (20) that houses the cooling fan (18); and
a generator with motor function (19) housed in the cooling housing (20), and disposed between the crankcase (14) and the cooling fan (18) in an axial direction of the crankshaft (15),
wherein
the cooling fan (18) is a centrifugal fan disposed coaxially with the crankshaft (15),
the cooling housing (20) includes an exhaust port (45) disposed in a centrifugal direction of the cooling fan (18),
the exhaust port (45) includes a first exhaust port end (451) which is one end in the circumferential direction of the cooling fan (18), and a second exhaust port end (452) which is the other end in the circumferential direction of the cooling fan (18); and
the generator with motor function (19) includes:
a rotor (24) connected to the end portion (151, 152) of the crankshaft(15) ;
a stator (25) fixed to the crankcase (14) and facing the rotor (24); and
a sensor unit (26, 26Q, 26P) attached to the stator (25);
and
the stator (25) includes a plurality of teeth (32) disposed in the circumferential direction with gaps therebetween, and
the gaps include a first gap (G1) and a second gap (G2), and
the sensor unit (26) includes:
a first sensor (36) disposed in the first gap (G1) and
a second sensor (37) disposed in the second gap (G2)
and
the first sensor (36) is longer than the second sensor (37) in the axial direction; and
a virtual line which extends in the centrifugal direction from a center of rotation (C2) of the cooling fan (18) and passes through the first exhaust port end (451) as seen from the axial direction, is defined as a first boundary line (L1, L1a, L1b, L1c, L1d, L1e),
a virtual line which extends in the centrifugal direction from the center of rotation (C2) of the cooling fan (18) and passes through the second exhaust port end (452) as seen from the axial direction, is defined as a second boundary line (L2, L2a, L2b, L2c, L2d, L2e),
a region in which the exhaust port (45) is disposed among two regions demarcated by the first boundary line (L1, L1a, L1b, L1c, L1d, L1e) and the second boundary line (L2, L2a, L2b, L2c, L2d, L2e) as seen from the axial direction in the cooling device (10), is defined as a first region (B1, B1a, B1b, B1c, B1d, B1e), and
another region disposed among the two regions demarcated by the first boundary line and the second boundary line as seen from the axial direction in the cooling device (10), is defined as a second region (B2, B2a, B2b, B2c, B2d, B2e), and
the first sensor (36) of the sensor unit (26) is disposed in the second region (B2, B2a, B2b, B2c, B2d, B2e) as seen from the axial direction,
wherein
the second sensor (37) of the sensor unit (26) is disposed in the first region (B1, B1a, B1b, B1c, B1d, B1e) as seen from the axial direction.

2. An engine (8) according to claim 1, wherein
the first sensor (36) is shifted in the axial direction with respect to the exhaust port (45).

3. An engine (8) according to any one of claims 1 to 2, wherein
the sensor unit (26) overlaps the cooling fan (18) as seen from the axial direction,
at least a portion of the exhaust port (45) is disposed under the cooling fan (18), and
the first sensor (36) is disposed above the second sensor (37).

4. An engine (8) according to any one of claims 1 to 2, wherein
the sensor unit (26) overlaps the cooling fan (18) as seen from the axial direction,
at least a portion of the exhaust port (45) is disposed under the cooling fan (18), and
the sensor unit (26) includes a plurality of sensors (36-39) including the first sensor (36) and the second sensor (37), and
the first sensor (36) is disposed the furthest upward among the plurality of sensors (36-39).

5. An engine (8) according to any one of claims 1 to 4, wherein
the exhaust port (45) is disposed below the center of rotation (C2) of the cooling fan (18), and
the first sensor (36) is disposed above the center of rotation (C2) of the cooling fan (18).

6. An engine (8) according to any one of claims 1 to 5, wherein
the sensor unit (26) includes a plurality of sensors (36-39) including the first sensor and (36) the second sensor (37), and
the first sensor (36) is the longest in the axial direction among the plurality of sensors (36-39).

7. An engine (8) according to any one of claims 1 to 6, wherein
the sensor unit (26) includes:
a plurality of sensors (36-39) including the first sensor (36) and the second sensor (37), and
a coupling portion (40) extending in the circumferential direction of the stator (25) and couples the plurality of sensors (36-39),
and
a portion of the coupling portion (40) is disposed in the first region (B1) as seen from the axial direction.

8. An engine (8) according to any one of claims 1 to 7, wherein
the stator (25) includes a stator coil (33), and
the engine (8) further comprising:
a coil cable (35a, 35b, 35c) connected to the stator coil (33);
a sensor cable (41) connected to the sensor unit (26); and
a bracket (43) bundling the coil cable (35a, 35b, 35c) and the sensor cable (41) together;
wherein,
the coil cable (35a, 35b, 35c) extends upward from the stator (25), and
a connecting portion (42) of the sensor unit (26) and the sensor cable (41) is disposed above a center of rotation (C1) of the stator (25).

9. An engine (8) according to any one of claims 1 to 7, wherein
the stator (25) includes a stator coil (33), and
the engine (8) further comprising:
a coil cable (35a, 35b, 35c) connected to the stator coil (33);
a sensor cable (41) connected to the sensor unit (26); and
a bracket (43) bundling the coil cable (35a, 35b, 35c) and the sensor cable (41) together;
wherein,
the coil cable (35a, 35b, 35c) extends forward from the stator (25), and
a connecting portion (42) of the sensor unit (26) and the sensor cable (41) is disposed above a center of rotation (C1) of the stator (25).

10. An engine (8) according to any one of claims 1 to 9, wherein
an upper end of the sensor unit (26) is positioned above the center of rotation (C1) of the stator (25) and
a lower end of the sensor unit (26) is positioned below the center of rotation (C1) of the stator (25) as seen from the axial direction.

11. An engine (8) according to any one of claims 1 to 10, wherein
the gaps further include a third gap (G3) positioned between the first gap (G1) and the second gap (G2) in the circumferential direction of the stator (25), and
the third gap (G3) is disposed between the first sensor (36) and the first boundary line (L1) in the circumferential direction of the cooling fan (18) as seen from the axial direction.

12. An engine (8) according to any one of claims 1 to 11, wherein
an opening for exhausting the air flow generated by the cooling fan (18) is not provided in the second region (B2).

13. An engine (8) according to any one of claims 1 to 12, wherein
the first exhaust port end (451) is an end portion (151, 152) on the downstream side of the exhaust port (45) in the rotating direction of the cooling fan (18), and
the second exhaust port end (452) is an end portion (151, 152) on the upstream side of the exhaust port (45) in the rotating direction of the cooling fan (18).

14. An engine (8) according to any one of claims 1 to 13, wherein
the sensor unit (26) is disposed facing the crankcase (14) in the axial direction, and
the crankcase (14) includes a rib (144) disposed in a position overlapping the sensor unit (26) as seen from the axial direction.

## Patentansprüche

1. Motor (8), der umfasst:
ein Kurbelgehäuse (14);
eine Kurbelwelle (15), die einen außerhalb des Kurbelgehäuses (14) angeordneten Endabschnitt (151, 152) enthält, wobei die Kurbelwelle (15) in dem Kurbelgehäuse (14) aufgenommen ist und sich um eine Achse (Ax1) der Kurbelwelle (15) herum dreht;
eine Kühlvorrichtung (10), die einen an dem Endabschnitt (151) der Kurbelwelle (15) angebrachten Kühlventilator (18) und ein Kühlgehäuse (20) enthält, das den Kühlventilator (18) aufnimmt; sowie
einen Generator mit Motorfunktion (19), der in dem Kühlgehäuse (20) aufgenommen und in einer axialen Richtung der Kurbelwelle (15) zwischen dem Kurbelgehäuse (14) und dem Kühlgebläse (18) angeordnet ist,
wobei
der Kühlventilator (18) ein koaxial zu der Kurbelwelle (15) angeordneter Radialventilator ist, das Kühlgehäuse (20) einen Abluftkanal (45) enthält, der in einer zentrifugalen Richtung des Kühlventilators (18) angeordnet ist,
der Abluftkanal (45) ein erstes Ende (451) des Abluftkanals, das ein Ende in der Umfangsrichtung des Kühlventilators (18) ist, sowie ein zweites Ende (452) des Abluftkanals enthält, das das andere Ende in der Umfangsrichtung des Kühlventilators (18) ist; und
der Generator mit Motorfunktion (19) enthält:
einen Rotor (24), der mit dem Endabschnitt (151, 152) der Kurbelwelle (15) verbunden ist;
einen Stator (25), der an dem Kurbelgehäuse (14) befestigt und dem Rotor (24) zugewandt ist; sowie
eine Sensor-Einheit (26, 26Q, 26P), die an dem Stator (25) angebracht ist;
und
der Stator (25) eine Vielzahl von Zähnen (32) enthält, die in der Umfangsrichtung mit Zwischenräumen zwischen ihnen angeordnet sind, und
die Zwischenräume einen ersten Zwischenraum (G1) sowie einen zweiten Zwischenraum (G2) einschließen, und
die Sensor-Einheit (26) enthält:
einen ersten Sensor (36), der in dem ersten Zwischenraum (G1) angeordnet ist, sowie einen zweiten Sensor (37), der in dem zweiten Zwischenraum (G2) angeordnet ist,
und
der erste Sensor (36) in der axialen Richtung länger ist als der zweite Sensor (37); und
eine virtuelle Linie, die sich in der Zentrifugalrichtung von einem Drehmittelpunkt (C2) des Kühlventilators (18) erstreckt und durch das, in der axialen Richtung gesehen, erste Ende (451) des Abluftkanals verläuft, als eine erste Begrenzungslinie (L1, L1a, L1b, L1c, L1d, L1e) definiert ist,
eine virtuelle Linie, die sich in der Zentrifugalrichtung von dem Drehmittelpunkt (C2) des Kühlventilators (18) aus erstreckt und durch das, in der axialen Richtung gesehen, zweite Ende (452) des Abluftkanals verläuft, als eine zweite Begrenzungslinie (L2, L2a, L2b, L2c, L2d, L2e) definiert ist,
ein Bereich, in dem der Abluftkanal (45) angeordnet ist, von zwei Bereichen, die durch die erste Begrenzungslinie (L1, L1a, L1b, L1c, L1d, L1e) und die zweite Begrenzungslinie (L2, L2a, L2b, L2c, L2d, L2e) abgegrenzt werden, als ein, in der axialen Richtung in der Kühlvorrichtung (10) gesehen, erster Bereich (B1, B1a, B1b, B1c, B1d, B1e) definiert ist, und
ein anderer Bereich, der zwischen den zwei Bereichen angeordnet ist, die durch die erste Begrenzungslinie und die zweite Begrenzungslinie abgegrenzt werden, als ein, in der axialen Richtung in der Kühlvorrichtung (10) gesehen, zweiter Bereich (B2, B2a, B2b, B2c, B2d, B2e) definiert ist, und
der erste Sensor (36) der Sensor-Einheit (26) in dem, in der axialen Richtung gesehen, zweiten Bereich (B2, B2a, B2b, B2c, B2d, B2e) angeordnet ist,
wobei
der zweite Sensor (37) der Sensor-Einheit (26) in dem, in der axialen Richtung gesehen, ersten Bereich (B1, B1a, B1b, B1c, B1d, B1e) angeordnet ist.

2. Motor (8) nach Anspruch 1, wobei
der erste Sensor (36) in Bezug auf den Abluftkanal (45) in der axialen Richtung verschoben ist.

3. Motor (8) nach einem der Ansprüche 1 bis 2, wobei
die Sensor-Einheit (26) den Kühlventilator (18) in der axialen Richtung gesehen überlappt, wenigstens ein Abschnitt des Abluftkanals (45) unter dem Kühlventilator (18) angeordnet ist, und
der erste Sensor (36) oberhalb des zweiten Sensors (37) angeordnet ist.

4. Motor (8) nach einem der Ansprüche 1 bis 2, wobei
die Sensor-Einheit (26) den Kühlventilator (18) in der axialen Richtung gesehen überlappt,
wenigstens ein Abschnitt des Abluftkanals (45) unter dem Kühlventilator (18) angeordnet ist, und
die Sensor-Einheit (26) eine Vielzahl von Sensoren (36-39) enthält, die den ersten Sensor (36) sowie den zweiten Sensor (37) einschließt, und
der erste Sensor (36) unter der Vielzahl von Sensoren (36-39) am weitesten oben angeordnet ist.

5. Motor (8) nach einem der Ansprüche 1 bis 4, wobei
der Abluftkanal (45) unterhalb des Drehmittelpunktes (C2) des Kühlventilators (18) angeordnet ist, und
der erste Sensor (36) oberhalb des Drehmittelpunktes (C2) des Kühlventilators (18) angeordnet ist.

6. Motor (8) nach einem der Ansprüche 1 bis 5, wobei
die Sensor-Einheit (26) eine Vielzahl von Sensoren (36-39) enthält, die den ersten Sensor (36) sowie den zweiten Sensor (37) einschließt, und
der erste Sensor (36) unter der Vielzahl von Sensoren (36-39) der längste in der axialen Richtung ist.

7. Motor (8) nach einem der Ansprüche 1 bis 6, wobei
die Sensor-Einheit (26) enthält:
eine Vielzahl von Sensoren (36-39), die den ersten Sensor (36) und den zweiten Sensor (37) einschließt, sowie
einen Kopplungsabschnitt (40), der sich in der Umfangsrichtung des Stators (25) erstreckt und die Vielzahl von Sensoren (36-39) koppelt,
und
ein Teil des Kopplungsabschnitts (40) in dem, in der axialen Richtung gesehen, ersten Bereich (B1) angeordnet ist.

8. Motor (8) nach einem der Ansprüche 1 bis 7, wobei
der Stator (25) eine Statorspule (33) enthält, und
der Motor (8) des Weiteren umfasst:
ein Spulen-Kabel (35a, 35b, 35c), das mit der Statorspule (33) verbunden ist;
ein Sensor-Kabel (41), das mit der Sensor-Einheit (26) verbunden ist; sowie
eine Schelle (43), die das Spulen-Kabel (35a, 35b, 35c) und das Sensor-Kabel (41) zusammenbündelt;
wobei
das Spulen-Kabel (35a, 35b, 35c) sich von dem Stator (25) nach oben erstreckt, und
ein Verbindungsabschnitt (42) der Sensor-Einheit (26) und des Sensor-Kabels (41) oberhalb eines Drehmittelpunktes (C1) des Stators (25) angeordnet ist.

9. Motor (8) nach einem der Ansprüche 1 bis 7, wobei
der Stator (25) eine Statorspule (33) enthält, und
der Motor (8) des Weiteren umfasst:
ein Spulen-Kabel (35a, 35b, 35c), das mit der Statorspule (33) verbunden ist;
ein Sensor-Kabel (41), das mit der Sensor-Einheit (26) verbunden ist; sowie
eine Schelle (43), die das Spulen-Kabel (35a, 35b, 35c) und das Sensor-Kabel (41) zusammenbündelt;
wobei
das Spulen-Kabel (35a, 35b, 35c) sich von dem Stator (25) nach vorn erstreckt und
ein Verbindungsabschnitt (42) der Sensor-Einheit (26) und des Sensor-Kabels (41) oberhalb eines Drehmittelpunktes (C1) des Stators (25) angeordnet ist.

10. Motor (8) nach einem der Ansprüche 1 bis 9, wobei, in der axialen Richtung gesehen,
ein oberes Ende der Sensor-Einheit (26) oberhalb des Drehmittelpunktes (C1) des Stators (25) positioniert ist und
ein unteres Ende der Sensor-Einheit (26) unterhalb des Drehmittelpunktes (C1) des Stators (25) positioniert ist.

11. Motor (8) nach einem der Ansprüche 1 bis 10, wobei
die Zwischenräume des Weiteren einen dritten Zwischenraum (G3) einschließen, der in der Umfangsrichtung des Stators (25) zwischen dem ersten Zwischenraum (G1) und dem zweiten Zwischenraum (G2) angeordnet ist, und
der dritte Zwischenraum (G3) in der Umfangsrichtung des Kühlventilators (18), in der axialen Richtung gesehen, zwischen dem ersten Sensor (36) und der ersten Begrenzungslinie (L1) angeordnet ist.

12. Motor (8) nach einem der Ansprüche 1 bis 11, wobei
in dem zweiten Bereich (B2) keine Öffnung zum Ableiten des durch den Kühlventilator (18) erzeugten Luftstroms vorhanden ist.

13. Motor (8) nach einem der Ansprüche 1 bis 12, wobei
das erste Ende (451) des Abluftkanals ein Endabschnitt (151, 152) an der stromab liegenden Seite des Abluftkanals (45) in der Drehrichtung des Kühlventilators (18) ist, und
das zweite Ende (452) des Abluftkanals ein Endabschnitt (151, 152) an der stromauf liegenden Seite des Abluftkanals (45) in der Drehrichtung des Kühlventilators (18) ist.

14. Motor (8) nach einem der Ansprüche 1 bis 13, wobei
die Sensor-Einheit (26) in der axialen Richtung dem Kurbelgehäuse (14) zugewandt angeordnet ist und
das Kurbelgehäuse (14) einen Steg (144) enthält, der an einer die Sensoreinheit (26), in der axialen Richtung gesehen, überlappenden Position angeordnet ist.

## Revendications

1. Moteur (8) comprenant :
un carter (14) ;
un vilebrequin (15) comprenant une partie d'extrémité (151, 152) située à l'extérieur du carter (14), le vilebrequin (15) étant logé dans le carter (14) et tournant autour d'un axe (Ax1) du vilebrequin (15) ;
un dispositif de refroidissement (10) comprenant un ventilateur (18) fixé à la partie d'extrémité (151) du vilebrequin (15) et un logement de refroidissement (20) dans lequel est logé le ventilateur (18) ; et
un générateur à fonction de moteur (19) logé dans le logement de refroidissement (20) et disposé entre le carter (14) et le ventilateur (18) dans une direction axiale du vilebrequin (15),
dans lequel
le ventilateur (18) est un ventilateur centrifuge disposé de manière coaxiale au vilebrequin (15),
le logement de refroidissement (20) comprend un orifice de sortie (45) disposé dans une direction centrifuge du ventilateur (18),
l'orifice de sortie (45) comporte une première extrémité d'orifice de sortie (451) qui est une extrémité dans la direction circonférentielle du ventilateur (18) et une seconde extrémité d'orifice de sortie (452) qui est l'autre extrémité dans la direction circonférentielle du ventilateur (18) ; et
le générateur à fonction de moteur (19) comprend :
un rotor (24) connecté à la partie d'extrémité (151, 152) du vilebrequin (15) ;
un stator (25) fixé au carter (14) et faisant face au rotor (24) ; et
une unité de détection (26, 26Q, 26P) fixée sur le stator (25) ;
et
le stator (25) comprend une pluralité de dents (32) disposées dans la direction circonférentielle et séparées par des intervalles, et
les intervalles comprennent un premier intervalle (G1) et un deuxième intervalle (G2), et
l'unité de détection (26) comprend :
un premier capteur (36) disposé dans le premier intervalle (G1) et
un deuxième capteur (37) disposé dans le deuxième intervalle (G2), et
le premier capteur (36) est plus long que le deuxième capteur (37) dans la direction axiale ; et
une ligne virtuelle qui s'étend dans la direction centrifuge à partir d'un centre de rotation (C2) du ventilateur (18) et passe par la première extrémité d'orifice de sortie (451), en vue dans la direction axiale, est définie en tant que première ligne de limite (L1, L1a, L1b, L1c, L1d, L1e),
une ligne virtuelle qui s'étend dans la direction centrifuge à partir du centre de rotation (C2) du ventilateur (18) et passe par la seconde extrémité d'orifice de sortie (452), en vue dans la direction axiale, est définie en tant que seconde ligne de limite (L2, L2a, L2b, L2c, L2d, L2e),
une région dans laquelle l'orifice de sortie (45) est disposé parmi deux régions délimitées par la première ligne de limite (L1, L1a, L1b, L1c, L1d, L1e) et la seconde ligne de limite (L2, L2a, L2b, L2c, L2d, L2e), en vue dans la direction axiale dans le dispositif de refroidissement (10), est définie en tant que première région (B1, B1a, B1b, B1c, B1d, B1e), et
une autre région disposée parmi les deux régions délimitées par la première ligne de limite et la seconde ligne de limite, en vue dans la direction axiale dans le dispositif de refroidissement (10), est définie en tant que seconde région (B2, B2a, B2b, B2c, B2d, B2e), et
le premier capteur (36) de l'unité de détection (26) est disposé dans la seconde région (B2, B2a, B2b, B2c, B2d, B2e), en vue dans la direction axiale,
dans lequel
le deuxième capteur (37) de l'unité de détection (26) est disposé dans la première région (B1, B1a, B1b, B1c, B1d, B1e), en vue dans la direction axiale.

2. Moteur (8) selon la revendication 1, dans lequel
le premier capteur (36) est décalé dans la direction axiale par rapport à l'orifice de sortie (45).

3. Moteur (8) selon l'une quelconque des revendications 1 à 2, dans lequel
l'unité de détection (26) chevauche le ventilateur (18), en vue dans la direction axiale,
au moins une partie de l'orifice de sortie (45) est située sous le ventilateur (18), et
le premier capteur (36) est situé au-dessus du deuxième capteur (37).

4. Moteur (8) selon l'une quelconque des revendications 1 à 2, dans lequel
l'unité de détection (26) chevauche le ventilateur (18), en vue dans la direction axiale,
au moins une partie de l'orifice de sortie (45) est située sous le ventilateur (18), et
l'unité de détection (26) comprend une pluralité de capteurs (36-39) comprenant le premier capteur (36) et le deuxième capteur (37), et
le premier capteur (36) est celui de la pluralité des capteurs (36-39) qui est situé le plus haut.

5. Moteur (8) selon l'une quelconque des revendications 1 à 4, dans lequel
l'orifice de sortie (45) est situé sous le centre de rotation (C2) du ventilateur (18), et
le premier capteur (36) est situé au-dessus du centre de rotation (C2) du ventilateur (18).

6. Moteur (8) selon l'une quelconque des revendications 1 à 5, dans lequel
l'unité de détection (26) comprend une pluralité de capteurs (36-39) comprenant le premier capteur (36) et le deuxième capteur (37), et
le premier capteur (36) est celui de la pluralité des capteurs (36-39) qui est le plus long dans la direction axiale.

7. Moteur (8) selon l'une quelconque des revendications 1 à 6, dans lequel
l'unité de détection (26) comprend :
une pluralité de capteurs (36-39) comprenant le premier capteur (36) et le deuxième capteur (37), et
une partie de couplage (40) qui s'étend dans la direction circonférentielle du stator (25) et couple la pluralité de capteurs (36-39),
et
une partie de la partie de couplage (40) est disposée dans la première région (B1), en vue dans la direction axiale.

8. Moteur (8) selon l'une quelconque des revendications 1 à 7, dans lequel
le stator (25) comprend une bobine de stator (33), et
le moteur (8) comprend en outre :
un câble de bobine (35a, 35b, 35c) connecté à la bobine de stator (33) ;
un câble d'unité de détection (41) connecté à l'unité de détection (26) ; et
une patte (43) qui rassemble en faisceau le câble de bobine (35a, 35b, 35c) et le câble d'unité de détection (41) ;
dans lequel
le câble de bobine (35a, 35b, 35c) s'étend vers le haut depuis le stator (25), et
une partie de connexion (42) de l'unité de détection (26) et du câble d'unité de détection (41) est située au-dessus d'un centre de rotation (C1) du stator (25).

9. Moteur (8) selon l'une quelconque des revendications 1 à 7, dans lequel
le stator (25) comprend une bobine de stator (33), et
le moteur (8) comprend en outre :
un câble de bobine (35a, 35b, 35c) connecté à la bobine de stator (33) ;
un câble d'unité de détection (41) connecté à l'unité de détection (26) ; et
une patte (43) qui rassemble en faisceau le câble de bobine (35a, 35b, 35c) et le câble d'unité de détection (41) ;
dans lequel
le câble de bobine (35a, 35b, 35c) s'étend vers l'avant depuis le stator (25), et
une partie de connexion (42) de l'unité de détection (26) et du câble d'unité de détection (41) est située au-dessus d'un centre de rotation (C1) du stator (25).

10. Moteur (8) selon l'une quelconque des revendications 1 à 9, dans lequel
une extrémité supérieure de l'unité de détection (26) est positionnée au-dessus du centre de rotation (C1) du stator (25), et
une extrémité inférieure de l'unité de détection (26) est positionnée en dessous du centre de rotation (C1) du stator (25), en vue dans la direction axiale.

11. Moteur (8) selon l'une quelconque des revendications 1 à 10, dans lequel
les intervalles comprennent en outre un troisième intervalle (G3) positionné entre le premier intervalle (G1) et le deuxième intervalle (G2) dans la direction circonférentielle du stator (25), et
le troisième intervalle (G3) est disposé entre le premier capteur (36) et la première ligne de limite (L1) dans la direction circonférentielle du ventilateur (18), en vue dans la direction axiale.

12. Moteur (8) selon l'une quelconque des revendications 1 à 11, dans lequel
une ouverture permettant d'évacuer le courant d'air généré par le ventilateur (18) n'est pas située dans la seconde région (B2).

13. Moteur (8) selon l'une quelconque des revendications 1 à 12, dans lequel
la première extrémité d'orifice de sortie (451) est une partie d'extrémité (151, 152) sur le côté d'aval de l'orifice de sortie (45) dans la direction de rotation du ventilateur (18), et
la seconde extrémité d'orifice de sortie (452) est une partie d'extrémité (151, 152) sur le côté d'amont de l'orifice de sortie (45) dans la direction de rotation du ventilateur (18).

14. Moteur (8) selon l'une quelconque des revendications 1 à 13, dans lequel
l'unité de détection (26) est disposée face au carter (14) dans la direction axiale, et
le carter (14) possède une nervure (144) disposée dans une position qui chevauche l'unité de détection (26), en vue dans la direction axiale.
